# EUROPEAN PATENT SPECIFICATION

(11) **EP 1 655 353 B1**
(45) Date of publication and mention of the grant of the patent: **29.07.2009**
(21) Application number: 05110314.1
(22) Date of filing: 03.11.2005
(51) Int. Cl.: C09D 17/00, C09B 67/00, C09D 5/02, C09D 7/00

(54) **Formulations for paste dyes comprising a mixture of additives and for a mixture of additives for water paints and a preparation method**
Zusammensetzungen für Farbpasten, die eine Mischung von Zusatzmittel enthalten, Mischung von Zusatzmittel für Wasseranstrichmittel und Verfahren zur Herstellung
Formulations de colorants en pâte comprenant un mélange d'additifs, mélange d'additifs pour peintures à l'eau et procédé de préparation

(30) Priority: 05.11.2004 IT UD20040206
(43) Date of publication of application: 10.05.2006
(73) Proprietor: M. V. Megatrade Ltd, 1075 Nicosia (CY)
(72) Inventor: Veronese, Francesco, 35042, ESTE (PD) (IT)
(74) Representative: Petraz, Davide Luigi

(56) References cited:
- US-A- 5 331 039
- DATABASE WPI Section Ch, Week 198233 Derwent Publications Ltd., London, GB; Class A14, AN 1982-69033E XP002371673 & JP 57 109864 A (DAINIPPON INK & CHEM KK) 8 July 1982 (1982-07-08)
- DATABASE WPI Section Ch, Week 200060 Derwent Publications Ltd., London, GB; Class A23, AN 2000-622027 XP002371674 & JP 2000 239376 A (DAINIPPON TORYO KK) 5 September 2000 (2000-09-05)

## Description

### FIELD OF THE INVENTION

The present invention concerns formulations for a mixture of wetting and dispersant additives for water paints.

The invention also concerns formulations, and a preparation method, for paste dyes, which formulations comprise a mixture of additives. The paste dyes to which the invention refers are concentrated dispersions of pigment, in a water solution, ready for use for coloring paints and decorative coverings with a water and solvent base.

### BACKGROUND OF THE INVENTION

It is known that the typical formulation of a concentrated dispersant of pigment or dye in paste is as follows:

| | |
|---|---|
| Glycols | 8-20% |
| Water | 10-15% |
| Ionic surface-active agent | 3-5% |
| Non-ionic surface-active agent (alkyl phenol ethoxylates) | 5-7% |
| Anti-foam | 0.1-0.2% |
| Biocides | 0.1% |
| Pigment | 30-50% |

It is also known that the classical formulation includes glycols with a low molecular weight (VOC - volatile organic compounds) and surface-active agents like alkyl phenol ethoxylates (APEO), which are notoriously dangerous for health and for the environment.

It is only in relatively recent times (less than a few years) that formulations for paste dyes have been studied, and are still being studied, to solve this shortcoming, that is, which do not pollute and are compatible with the environment, and are not dangerous either for the workers during the application step, or subsequently for users.

For some years, for example, the technology of emulsifiers based on polyesters modified with fatty acids (FAME - fatty acid modified emulsions technology) has been known. According to this technology, the partial or total substitution of APEO surface-active additives (wetting or dispersant) with FAME additives allows to obtain formulations without alkyl phenol ethoxylates (APEO-free) and with a limited emission of volatile organic compounds (NO-VOC or low-VOC).

The presence on the market of wetting or dispersant NO-VOC and labeling free additives is rather limited. Here and in the following description "labeling free" is intended to mean formulations or substances exempt from classifications of risk to the health and environment.

There are additives classified as NO-VOC on the market which have good dispersant properties, but in any case they are often not "labeling free", since generally they contain in their composition substances classified as noxious (R20/21/22), irritant (R36, R37, R38, R41), toxic, noxious or dangerous for the water environment (R50, R51, R52/53).

The technology of FAME-type emulsifiers allows the formulation of dye pastes which are at the same time both NO-VOC and "labeling free"; however, this solution has proved to be not totally effective and does not answer the requirements of producers, in terms of quality parameters of the result obtained.

To be more exact, based on experiments performed, the FAME technology has proved to be inefficacious for the following reasons:
1. in some cases it does not allow to produce dye pastes with a high content of pigment, both of the inorganic and, in particular, of the organic type. The production of dye pastes with a high pigment content, using the FAME technology, is compromised due to the high viscosity achieved.
2. FAME-type additives in many cases do not act as low foaming additives since, especially when there is a high pigment content, they do not allow an efficient elimination of the residual air, thus reducing their viscous-depressant effect;
3. the exclusive use of FAME-type additives does not allow a good stability in storage: dye pastes based on pigments of the inorganic type are subject to obvious phenomena of separation and syneresis, which in most cases are difficult to eliminate using rheological additives alone (associative thickening agents and not, activated bentonites, and pyrogenic silicas).

EP-A-0.346.064, which represents the closest prior art, discloses a pigment dispersing agent, which can be used to make compositions for dyes and inks and comprehends the synthesis of dispersants having chemical affinity with polyesters modified with fatty acids having polar heads based on amine of the tertiary type.
US-A-5.331.039, JP-A-57 109864 and JP-A-2000 239376 disclose compositions, such as pigments or dispersants, to be used in paints or coatings, which have the features of the preamble of the main claims.
One purpose of the present invention is to propose NO-VOC and APEO-free formulations, and the relative preparation methods, using synergic combinations of families of additives, including but not limited to families of FAME additives, in order to obtain dye pastes and relative additives or mixtures of additives, which at the same time satisfy the requirements of environmental compatibility, are not dangerous for health and have better chemical-physical properties than known solutions.
The Applicant has devised, tested and embodied the present invention to overcome the shortcomings of the state of the art and to obtain these and other purposes and advantages.

### SUMMARY OF THE INVENTION

The present invention is set forth and characterized in the main claims, while the dependent claims describe other characteristics of the invention or variants to the main inventive idea.

In accordance with the above purpose, the present invention consists in perfecting an optimum combination of additives to be employed in the formulation of dyes in paste or premixed and subsequently added to the formulation of water paints (post-additives).

The paste or pre-mixed dyes are used for paints and decorative coverings, and comprise at least water, glycols, mineral charge, biocides, pH stabilizers, at least one organic or inorganic pigment and a combination of wetting and dispersant additives.

The invention is defined by claims 1 and 3 with further embodiments defined by claims 2 and 4-9 as well as claims 12-13.

The additives used in combination according to the invention belong to the following families:
(a) polyesters modified with fatty acids (FAME, fatty acid modified emulsions - fatty acid modified polyesters) with a molecular weight from 1000 to 3000 g/mol, an acid value of between 35 and 60 mg KOH/g and an amine value of between 30 and 65 mg KOH/g, having at least two polar heads based on amines of the tertiary type, able to act as anchoring groups of the pigment, and to impart efficacious emulsifying properties in water systems by means of the formation of hydrogen links. The hydrophobic chains of fatty acid have a high level of unsaturation, such as to impart a greater fluidity to the additive and to be subjected to cross-linking in the presence of oxygen.
(b) polyesters modified with fatty acids (FAME, fatty acid modified emulsions - fatty acid modified polyesters) with a molecular weight from 1000 to 3000 g/mol, having polar heads based on amines of the tertiary type, having an acid value of between 10 and 34 mg KOH/g and an amine value of between 20 and 45 mg KOH/g, able to act as anchoring groups of the pigment and to impart efficacious emulsifying properties in water systems by means of the formation of hydrogen links. The hydrophobic chains of fatty acid have a high level of unsaturation, such as to impart a greater fluidity to the additive and to be subjected to cross-linking in the presence of oxygen.
(c) emulsifiers based on fatty acids C16 and C18 (or higher), insaturated, esterified with esters of the polysaccharide type, for example:
   - CAS 9005-65-6 (polyoxyethylene (20) sorbitan monooleate);
   - CAS 9005-66-7 (polyoxyethylene (20) sorbitan monopalmitate);
   - CAS 9005-70-3 (polyoxyethylene (20) sorbitan trioleate);
   - CAS 9005-64-5 (polyoxyethylene (20) sorbitan monolaurate);
   - CAS 9005-67-8 (polyoxyethylene (20) sorbitan monostearate).
      These emulsifiers, in some cases, cannot properly be classified as NO-VOC, since the vapor tension can reach values of above 0.01 kPa to 293.15 K. However, they are "labeling free" and in any case allow to obtain concentrations of ultra-low VOC pigment pastes.
(d) poly-anionic polymeric dispersants, belonging to the family of POLY-CARBOXYLATES or POLY-ACRYLATES, generally in the form of sodium salt, potassium salt, ammonic salt. The family of active products for the use described comprises organic acids (and respective salts) having carboxylic functional groups along the organic chain. Therefore, bi-carboxylic, tricarboxylic, and n-(poly) carboxylic acids and the respective salts are active. Any type of agent belonging to said family of poly-carboxylates has been found to be active for the purpose. For the production of rigorously NO-VOC dyes it is necessary to use poly-carboxylates with a high molecular weight, "labeling free", without solvents and classified NO-VOC.
(e) non-ionic additives based on ethoxylated and/or propoxylated alcohols C16-C12 (CAS 68937-66-6, alcohols, C6-C12, ethoxylated, propoxylated), classified NO-VOC and "labeling free".

Using the additives of the families listed from (a) to (e) in appropriate percentages, intended to obtain specific properties of the final products, we have the advantage, as said, that dangerous components for health and the environment are eliminated, and at the same time better chemical-physical parameters of the paste dyes are obtained compared with known formulations, with surprising results in terms of color development, compatibility and stability in storage of the pastes.

The method to prepare paste dyes for colouring points and decorative coverings are defined by claim 10 and dependent claim 11.

The general formulation for paste dyes using the combination of wetting and dispersant additives according to the present invention comprises, among the conventional components, the following:
- de-mineralized, de-ionized or industrial water without any limitation in terms of hardness and saline content provided that the dispersant system is able to reduce the hardness of the water used;
- glycols, including for example polyethylene-glycol PEG200, polyethylene-glycol PEG400, tri-ethylene-glycol and tri-propylene-glycol-methyl-ether,
- mineral charge consisting for example of aluminum silicates, kaolin, calcined kaolin, attapulgite clays and paste extender,
- organic or inorganic pigment,
- biocide systems,
- solutions of NaOH or KOH 25% as pH stabilizers.

The wetting and dispersant additives chosen from the families listed are present in the paste dyes with a percentage weight of between 1 and 15% for family (a), between 0.5 and 6% for family (b), less than 5% for family (c), between 0.05 and 2% for family (d), less than 5% for family (e).

### EXAMPLES

### Example 1: universal paste dyes for use in water and solvent based systems.

In the formulation of example 1, water is present with a percentage weight of from 0% to 60%. The glycols present are polyethylene-glycol PEG200 with a percentage weight of 0% to 20%, polyethylene-glycol PEG400 with a percentage weight of from 0% to 10%, tri-ethylene-glycol with a percentage weight of from 0% to 15% and tri-propylene-glycol-methyl-ether with a percentage weight of from 0% to 15%. The mineral charge is present with a percentage weight of from 0% to 6%. The pigment can be organic or inorganic. If organic, it is present with a percentage weight of from 15% to 45%. If inorganic, it is present with a percentage weight of from 30% to 65%.

The wetting and dispersant additives are present with a percentage weight of between 4% and 15% for family (a), between 0.5% and 6% for family (b), between 0.5 and 5% for family (c), between 0.05 and 2% for family (d). There are no additives of family (e) present.

The combination described of the families of additives creates a synergic effect deducible from the parameters shown in the Table measured during the production step:

| Parameter | Traditional paste (*) | FAME technology | Inventive paste example 1 |
|---|---|---|---|
| Viscous-depressant effect with high pigment content | 0 | 0 | ++ |
| Foam formation control/ elimination of residual air | + | 0 | ++ |
| Storage stability (syneresis sedimentation) | 0 | - | ++ |

| | | | |
|---|---|---|---|
| - = limited 0 = moderate + = good ++ = very good (*) Traditional paste: dye paste based on glycols and ionic and non-ionic surface tension agents not classified as NO-VOC or as "labeling free". | | | |

Storage stability was tested on dye paste based on inorganic pigment (PIGMENT YELLOW 42, 55%) at 50°C with the results shown in the following Table:

| Syneresis/separation | Paste A traditional (*) | FAME technology | Inventive paste Example 1 |
|---|---|---|---|
| 1 week | + | + | ++ |
| 2 weeks | 0 | 0 | ++ |
| 3 weeks | 0 | - | + |
| 4 weeks | 0 | - | 0 |

| | | | |
|---|---|---|---|
| - = evident syneresis - high separation 0 = moderate separation (acceptable value) + = slight syneresis ++ = very limited/no separation (*) Traditional paste: dye paste based on glycols and ionic and non-ionic surface tension agents not classified as NO-VOC or as "labeling free". | | | |

With regard to the stability of the viscosity of the pastes during storage, no particular variations were seen among the pastes examined. The viscous-depressant effect of the combination of additives according to example 1 is mainly performed during the dispersion of the pigments and hence during the production step of the dye paste. The combination of additives according to example 1 also allows, during the dispersion step, a further reduction of the viscosity, considerably facilitating the loss of air and keeping an efficacious control of the formation of foam.

Compatibility and color development were measured during the use of the dye pastes obtained with the combination of additives according to example 1, with additives according to the FAME technology, and with traditional additives. The Table shows the comparative results obtained on pastes based on pigments of the organic type such as PIGMENT RED 112, PIGMENT YELLOW 74, PIGMENT VIOLET 23 and for pastes based on pigments of the inorganic type such as PIGMENT YELLOW 42, PIGMENT RED 101, PIGMENT BLACK 11.

| | Traditional paste (*) | FAME technology | Inventive paste Example 1 |
|---|---|---|---|
| Color development | 0 | + | ++ |
| Compatibility on water bases | 0 | + | ++ |
| Compatibility on solvent bases | + | + | + |

| | | | |
|---|---|---|---|
| 0 = moderate + = good ++ = high (*) Traditional paste: dye paste based on glycols and ionic and non-ionic surface tension agents not classified as NO-VOC or as "labeling free". | | | |

### Example 2: dye paste for water based systems.

In the formulation of example 2, water is present with a percentage weight of from 15% to 25%. The glycols present are polyethylene-glycol with a percentage weight of 0% to 8%, polyethylene-glycol PEG400 with a percentage weight of from 0% to 8%, tri-ethylene-glycol with a percentage weight of from 0% to 8% and tri-propylene-glycol-methyl-ether with a percentage weight of from 0% to 5%. The mineral charge is present with a percentage weight of from 0% to 8%. The pigment is inorganic and is present with a percentage weight of from 30% to 70%.

The wetting and dispersant additives are present with a percentage weight of between 1% and 5% for family (a), between 0.5% and 6% for family (b), between 0.1 and 2% for family (d), between 0.1 and 5% for family (e). There are no additives of family (c) present. The additives of family (e) increase the HLB value (hydrophilic-lipophilic balance) and have the function of further increasing the color development of the pastes, particularly for inorganic pigments.

The combination described of the families of additives creates a synergic effect deducible from the parameters shown in the Table measured during the production step:

| Parameter | Traditional paste (*) | FAME technology | Inventive paste Example 2 |
|---|---|---|---|
| viscous-depressant effect with high pigment content | 0 | 0 | ++ |
| Foam formation control/ elimination residual air | + | 0 | ++ |
| Storage stability (syneresis sedimentation) | 0 | - | ++ |

| | | | |
|---|---|---|---|
| - = limited 0 = moderate + = good ++ = very good (*) Traditional paste: dye paste based on glycols and ionic and non-ionic surface tension agents not classified as NO-VOC or as "labeling free". | | | |

Storage stability was tested on dye paste based on inorganic pigment (PIGMENT YELLOW 42, 60%) at 50°C with the results shown in the following Table:

| Syneresis/separation | Traditional paste (*) | FAME technology | Inventive paste Example 2 |
|---|---|---|---|
| 1 week | + | + | ++ |
| 2 weeks | 0 | 0 | ++ |
| 3 weeks | 0 | - | + |
| 4 weeks | 0 | - | 0 |

| | | | |
|---|---|---|---|
| - = evident syneresis - high separation 0 = moderate separation (acceptable value) + = slight syneresis ++ = very limited/no separation (*) Traditional paste: dye paste based on glycols and ionic and non-ionic surface tension agents not classified as No-VOC or as "labeling free". | | | |

The compatibility and color development shown in the following Table correspond to the results obtained with the combination of additives according to the example 2, which can also be used for pastes based on organic pigments. However, the maximum color development of the pastes obtained with the combination of additives according to example 2 was observed for pastes based on inorganic pigments such as PIGMENT RED 101, PIGMENT YELLOW 42, PIGMENT BLACK 11, where the use of the family of additives (d) and (e) in combination achieves the maximum synergic effect:

| | Traditional paste (*) | FAME technology | inventive paste Example 2 |
|---|---|---|---|
| Color development | 0 | + | ++ |
| Compatibility on water bases | 0 | + | ++ |

| | | | |
|---|---|---|---|
| 0 = moderate + = good ++ = very good (*) Traditional paste: dye paste based on glycols and ionic and non-ionic surface tension agents not classified as NO-VOC or as "labeling free". | | | |

The method to obtain paste dyes according to the formulations of examples 1 and 2 is as follows:
(i) Preparation of the grinding base consisting of water, glycols and wetting and dispersant additives.
(ii) Correction and stabilization of the pH by means of a solution of NaOH or KOH 25%.
(iii) Addition, dispersion and grinding of the pigment and mineral charges.

In a preferential embodiment the steps indicated above are performed in a ball grinder.

### Example 3: mixture of wetting and dispersant additives for water paints

In the formulation in example 3, water is present with a percentage weight of from 15% to 25%. The wetting and dispersant additives are present with a percentage weight of 0% to 20% for family (a), 20% and 60% for family (b), between 2% and 15% for family (d), between 0 and 10% for family (e).

The combination described of the families of additives performs a synergic effect deducible from the strengthening of the wetting and dispersant properties with respect to the use of individual agents when it is used as a mixture of additives for the formulation of water paints.

The mixture of additives according to example 3 is also particularly active when used as a post-additive for white water paints, produced with traditional wetting and dispersant additives.

The post-addition of the mixture of additives obtained according to example 3 to white water paints (bases) in percentages variable from 0.5 to 3% brings a significant increase in the acceptance and development of the color when the water paints (bases) are subsequently colored with paste dyes, in this way performing an evident "compatibilizing effect".

The following Table shows the results obtained in a comparison of the significant parameters for traditional additives and for the mixture of additives according to example 3:

| Parameter | Traditional additives (*) | Inventive Combination example 3 |
|---|---|---|
| Viscous-depressant effect | + | ++ |
| Foam formation control/ elimination residual air | + | ++ |
| Storage stability | + | + |
| wetting of pigments and charges | 0 | ++ |
| Color development following post-addition of dye pastes | - | ++ |

| | | |
|---|---|---|
| - = limited 0 = moderate + = good ++ = very good (*) by traditional additives we mean: -polyphosphates of sodium; -poly-acrylates (e.g. HYDROPALAT® A, HYDROPALAT® N, made by COGNIS®, NUOSPERSE® FX 504, FX 505, FX 540, FX 609, made by ELEMENTIS SPECIALTIES NETHERLANDS B.V.); - wetting agents of various types, such as ethoxylated oleic alcohols, and polyglycol esters of fatty acids. | | |

## Claims

1. Formulation for a mixture of wetting and dispersant additives for water paints, **characterized in that** said additives are chosen from the family of polyesters modified with fatty acids having a molecular weight of between 1000 and 3000 g/mol, an acid value of between 35 and 60 mg KOH/g, an amine value of between 30 and 65 mg KOH/g, and having at least two polar heads based on amines of the tertiary type with a percentage weight of between 0% and 20%, the family of polyesters modified with fatty acids having a molecular weight of between 1000 and 3000 g/mol, an acid value of between 10 and 34 mg KOH/g, an amine value of between 20 and 45 mg KOH/g and having polar heads based on amines of the tertiary type with a percentage weight comprised between 20% and 60%, the family of poly-carboxylate or poly-acrylate poly-anionic polymeric dispersants with a percentage weight comprised between 2% and 15%, the family of non-ionic additives based on ethoxylate or propoxylate alcohols C6-C12 with a percentage weight of between 0% and 10%.

2. Formulation as in claim 1, **characterized in that** said mixture of wetting and dispersant additives for water paints also comprises at least water with a percentage weight of from 15% to 25%.

3. Formulation for paste dyes for coloring paints and decorative coverings comprising at least water, glycols, mineral charge, biocides, pH stabilizers, at least one organic or inorganic pigment and a combination of wetting and dispersant additives, **characterized in that** said additives are chosen from:
- the family of polyesters modified with fatty acids having a molecular weight of between 1000 and 3000 g/mol, an acid value of between 35 and 60 mg KOH/g, an amine value of between 30 and 65 mg KOH/g, having at least two polar heads based on amines of the tertiary type with a percentage weight of between 1 and 15%,
- the family of polyesters modified with fatty acids having a molecular weight of between 1000 and 3000 g/mol, an acid value of between 10 and 34 mg KOH/g, an amine value of between 20 and 45 mg KOH/g, having polar heads based on amines of the tertiary type with a percentage weight of between 0.5 and 6%,
- the family of emulsifiers based on fatty acids C16 and C18 unsaturated and esterified with polysaccharide esters with a percentage weight of less than 5%,
- the family of poly-carboxylate or poly-acrylate poly-anionic polymeric dispersants with a percentage weight of between 0.05 and 2%,
- the family of non-ionic additives based on ethoxylate or propoxylate alcohols C6-C12 with a percentage weight of less than 5%.

4. Formulation as in claim 3, for universal paste dye, **characterized in that** the wetting and dispersant additives are present with a percentage weight comprised between 4% and 15% for the polyesters modified with fatty acids having an acid value of between 35 and 60 mg KOH/g, amine value of between 30 and 65 mg KOH/G and having at least two polar heads based on amines of the tertiary type, between 0.5% and 6% for the polyesters modified with fatty acids having an acid value of between 10 and 34 mg KOH/g, an amine value of between 20 and 45 mg KOH/g and having polar heads based on amines of the tertiary type, between 0.5% and 5% for emulsifiers based on fatty acids C16 and C18 unsaturated esterified with polysaccharide esters, between 0.05 and 2% for poly-carboxylate or poly-acrylate poly-anionic polymeric dispersants.

5. Formulation as in claim 4, **characterized in that** said universal paste also comprises at least water with a percentage weight of from 0% to 60%; polyethylene-glycol PEG200 with a percentage weight of from 0% to 20%, polyethylene-glycol PEG400 with a percentage weight of from 0% to 10%, tri-ethylene-glycol with a percentage weight of from 0% to 15% and tri-propylene-glycol-methyl-ether with a percentage weight of from 0% to 15%; a mineral charge with a percentage weight of from 0% to 6%; and at least a pigment.

6. Formulation as in claim 5, comprising an organic pigment with a percentage weight of from 15% to 45%.

7. Formulation as in claim 5, comprising an inorganic pigment with a percentage weight of from 30% to 65%.

8. Formulation as in claim 3, for paste dyes for water-based systems, **characterized in that** the wetting and dispersant additives are present with a percentage weight comprised between 1% and 5% for the polyesters modified with fatty acids having an acid value of between 35 and 60 mg KOH/g, an amine value of between 30 and 65 mg KOH/g and having at least two polar heads based on amines of the tertiary type, between 0.5% and 6% for the polyesters modified with fatty acids having an acid value of between 10 and 34 mg KOH/g, an amine value of between 20 and 45 mg KOH/g and having polar heads based on amines of the tertiary type, between 0.1% and 2% for poly-carboxylate or poly-acrylate poly-anionic polymeric dispersants, between 0.1% and 5% for non-ionic additives based on ethoxylate or propoxylate alcohols C6-C12.

9. Formulation as in claim 8, **characterized in that** said paste for water-based systems also comprises at least water with a percentage weight of from 15% to 25%; polyethylene-glycol with a percentage weight of from 0% to 8%, polyethylene-glycol PEG400 with a percentage weight of from 0% to 8%, tri-ethylene-glycol with a percentage weight of from 0% to 8% and tri-propylene-glycol-methyl-ether with a percentage weight of from 0% to 5%; a mineral charge with a percentage weight of from 0% to 8%; an inorganic pigment with a percentage weight of from 30% to 70%.

10. Method to prepare paste dyes for coloring paints and decorative coverings comprising the steps of:
- a first step consisting in the preparation of a grinding base consisting of water, poly-glycols and wetting and dispersant additives chosen from the family of polyesters modified with fatty acids having a molecular weight of between 1000 and 3000 g/mol, an acid value of between 35 and 60 mg KOH/g, an amine value of between 30 and 65 mg KOH/g and having at least two polar heads based on amines of the tertiary type with a percentage weight of between 1 and 15%, the family of polyesters modified with fatty acids having a molecular weight of between 1000 and 3000 g/mol, an acid value of between 10 and 34 mg KOH/g, an amine value of between 20 and 45 mg KOH/g and having at least one polar head based on amines of the tertiary type with a percentage weight of between 0.5 and 6%, the family of emulsifiers based on fatty acids C16 and C18 unsaturated esterified with polysaccharide esters with a percentage weight of less than 5%, the family of poly-carboxylate or poly-acrylate poly-anionic polymeric dispersants with a percentage weight of between 0.05 and 2%, the family of non-ionic additives based on ethoxylate or propoxylate alcohols C6-C12 with a percentage weight of less than 5%;
- a second step consisting in the correction and stabilization of the pH of said grinding base by means of a solution of NaOH or KOH 25%;
- a third step consiting in the addition and dispersion of pigment and mineral charges in said grinding base and subsequent grinding of the mixture obtained from said grinding base and said pigment and mineral charges.

11. Method as in claim 10, wherein the first, the second and the third steps are performed with a ball grinder.

12. Paste dyes for paints and decorative coverings using the formulations according to any claim from 3 to 9.

13. Mixture of wetting and dispersant additives to make water paints using the formulation according to claim 1.

## Patentansprüche

1. Zusammensetzung für eine Mischung aus befeuchtenden und dispergierenden Zusatzmitteln für Wasseranstrichmittel, **dadurch gekennzeichnet, dass** die besagten Zusatzmittel aus der Familie der Polyester, die mit Fettsäuren modifiziert sind, welche ein Molekulargewicht zwischen 1000 und 3000 g/mol, einen Säurewert zwischen 35 und 60 mg KOH/g, einen Aminwert zwischen 30 und 65 mg KOH/g und die wenigsten zwei auf tertiären Aminen basierende polare Köpfe aufweisen, mit einem prozentualen Gewichtsanteil zwischen 0% und 20%, aus der Familie der Polyester, die mit Fettsäuren modifiziert sind, welche ein Molekulargewicht zwischen 1000 und 3000 g/mol, einen Säurewert zwischen 10 und 34 mg KOH/g, einen Aminwert zwischen 20 und 45 mg KOH/g und auf tertiären Aminen basierende polare Köpfe aufweisen, mit einem prozentualen Gewichtsanteil zwischen 20 und 60%, aus der Familie der poly-anionischen polymeren Polycarboxylat- oder Polyacrylat-Dispergiermittel mit einem prozentualen Gewichtsanteil zwischen 2% und 15% und aus der Familie der nicht ionischen Zusatzmittel, die auf Ethoxylat- oder Propoxylat-Alkoholen mit einer C6-C12-Kohlenstoffkette basieren, mit einem prozentualen Gewichtsanteil zwischen 0 und 10 % ausgewählt sind.

2. Zusammensetzung nach Anspruch 1, **dadurch gekennzeichnet, dass** die besagte Mischung von befeuchtenden und dispergierenden Zusatzmitteln für Wasseranstrichmittel ferner wenigstens Wasser mit einem prozentualen Gewichtsanteil von 15% bis 25% aufweist.

3. Zusammensetzung für Farbstoffpasten, Farbanstriche und dekorative Deckschichten mit wenigstens Wasser, Glykol, einem anorganischen Füllstoff, Bioziden, pH-Stabilisatoren und wenigstens einem organischen oder anorganischen Pigment und einer Kombination von befeuchtenden und dispergierenden Zusatzmitteln, **dadurch gekennzeichnet, dass** die Zusatzmittel ausgewählt sind aus:
- der Familie der Polyester, die mit Fettsäuren modifiziert sind, welche ein Molekulargewicht zwischen 1000 und 300 g/mol, einen Säurewert zwischen 35 und 60 mg KOH/g, einen Aminwert zwischen 30 und 65 mg KOH/g und wenigstens zwei auf tertiären Aminen basierende polare Köpfe aufweisen, mit einem prozentualen Gewichtsanteil zwischen 1 und 15 %,
- der Familie der Polyester, die mit Fettsäuren modifiziert sind, welche ein Molekulargewicht zwischen 1000 und 3000 g/mol, einen Säurewert zwischen 10 und 34 mg KOH/g, einen Aminwert zwischen 20 und 45 mg KOH/g und auf tertiären Aminen basierende polare Köpfe aufweisen, mit einem prozentualen Gewichtsanteil zwischen 0,5 und 6%,
- der Familie der Emulgatoren, die auf Fettsäuren basieren, die eine ungesättigte C16- oder C18-Kohlenstoffkette aufweisen und mit Polysacharidestern verestert sind, mit einem prozentualen Gewichtsanteil von weniger als 5 %,
- der Familie der poly-anionischen polymeren Polycarboxylat- oder Polyacrylat-Dispergiermittel mit einem prozentualen Gewichtsanteil zwischen 0,05 und 2 % und
- der Familie der nicht ionischen Zusatzmittel, die auf Ethoxylat oder Propoxylat-Alkoholen mit einer C6-C12-Kohlenstoffkette basieren, mit einem prozentualen Gewichtsanteil von weniger als 5%.

4. Zusammensetzung nach Anspruch 3 für eine allgemeine Farbstoffpaste, **dadurch gekennzeichnet, dass** das befeuchtende und dispergierende Zusatzmittel mit einem prozentualen Gewichtsanteil zwischen 4% und 15% hinsichtlich der Polyester, die mit Fettsäuren modifiziert sind, die einen Säurewert zwischen 35 und 60 mg KOH/g, einen Aminwert zwischen 30 und 65 mg KOH/g und wenigstens zwei auf tertiären Aminen basierende polare Köpfe aufweisen, und zwischen 0,5 und 6 % hinsichtlich der Polyester, die mit Fettsäuren modifiziert sind, welche einen Säurewert zwischen 10 und 34 mg KOH/g einen Aminwert zwischen 20 und 45 mg KOH/g und auf tertiären Aminen basierende polare Köpfe aufweisen, zwischen 0,5% und 5% hinsichtlich der Emulgatoren, die auf Fettsäuren basieren, die eine ungesättigte C16- oder C18-Kohlenstoffkette aufweisen und mit Polysaccharidestern verestert sind, und zwischen 0,05% und 2% hinsichtlich der poly-anionischen polymeren Polycarboxylat- oder Polyacrylat- Dispergiermittel vorliegen.

5. Zusammensetzung nach Anspruch 4, **dadurch gekennzeichnet, dass** die besagte allgemeine Paste ferner wenigstens Wasser mit einem prozentualen Gewichtsanteil von 0 bis 60%, Polyethylenglykol PEG200 mit einem prozentualen Gewichtsanteil von 0 bis 20%, Polyethylenglykol PEG400 mit einem prozentualen Gewichtsanteil von 0 bis 10%, Tri-ethylen-gykol mit einem prozentualen Gewichtsanteil von 0% bis 15%, Tripropylen-glykol-methyl-ether mit einem prozentualen Gewichtsanteil von 0% bis 15%, einen anorganischen Füllstoff mit einem prozentualen Gewichtsanteil von 0% bis 6% und wenigstens ein Pigment aufweist.

6. Zusammensetzung nach Anspruch 5, die ein organisches Pigment mit einem prozentualen Gewichtsanteil von 15% bis 45% enthält.

7. Zusammensetzung nach Anspruch 5, die ein anorganisches Pigment mit einem prozentualen Gewichtsanteil von 30% bis 65% enthält.

8. Zusammensetzung nach Anspruch 3 für Farbstoffpasten für wässrige Systeme, **dadurch gekennzeichnet, dass** die befeuchtenden und dispergierenden Zusatzmittel mit einem prozentualen Gewichtsanteil zwischen 1% und 5% hinsichtlich der Polyester, die mit Fettsäuren modifiziert sind, die einen Säurewert zwischen 35 und 60 mg KOH/g, einen Aminwert zwischen 30 und 65 mg KOH/g und wenigstens zwei auf tertiären Aminen basierende polare Köpfe aufweisen, zwischen 0,5% und 6% hinsichtlich der Polyester, die mit Fettsäuren modifiziert sind, die einen Säurewert zwischen 10 und 34 mg KOH/g, einen Aminwert zwischen 20 und 45 mg KOH/g und auf tertiären Aminen basierende polare Köpfe aufweisen, zwischen 0,1% und 2% hinsichtlich der poly-anionischen polymeren Polycarboxylat- oder Polyacrylat- Dispergiermittel und zwischen 0,1% und 5% hinsichtlich der nichtionischen Zusatzmittel vorliegen, die auf Ethoxylat- oder Propoxylat-Alkoholen mit einer C6-C12-Kohlenstoffkette basieren.

9. Formulierung nach Anspruch 8, **dadurch gekennzeichnet, dass** die besagte Paste für wässrige Systeme ferner wenigstens Wasser mit einem prozentualen Gewichtsanteil von 15% bis 25%, Polyethylenglykol mit einem prozentualen Gewichtsanteil von 0% bis 8%, Polyethylenglykol PEG400 mit einem prozentualen Gewichtsanteil von 0% bis 8%, Tri-ethylen-glykol mit einem prozentualen Gewichtsanteil von 0% bis 8%, Tri-propylenglykol-methyl-ether mit einem prozentualen Gewichtsanteil von 0% bis 5%, einen anorganischen Füllstoff mit einem prozentualen Gewichtsanteil von 0% bis 8%, und ein anorganisches Pigment mit einem prozentualen Gewichtsanteil von 30% bis 70% aufweist.

10. Verfahren zum Herstellen von Farbstoffpasten für Farbanstriche und dekorative Deckschichten mit den Schritten:
- einem ersten Schritt, der in der Zubereitung eines zu vermahlenden Grundmaterials besteht, das Wasser, Polyglykole und befeuchtende sowie dispergierende Zusatzmittel enthält, die aus der Familie der Polyester, die mit Fettsäuren modifiziert sind, welche ein Molekulargewicht zwischen 1000 und 3000 g/mol, einen Säurewert zwischen 35 und 60 mg KOH/g, einen Aminwert zwischen 30 und 65 mg KOH/g und wenigstens zwei auf tertiären Aminen bestehende polare Köpfe aufweisen, mit einem prozentualem Gewichtsanteil zwischen 1 und 15%, aus der Familie der Polyester, die mit Fettsäuren modifiziert sind, welche ein Molekulargewicht zwischen 1000 und 3000 g/mol, einen Säurewert zwischen 10 und 34 mg KOH/g und einen Aminwert zwischen 20 und 45 mg KOH/g und wenigstens einen auf tertiären Aminen basierenden polaren Kopf aufweisen, mit einem prozentualen Gewichtsanteil zwischen 0,5% und 6%, aus der Familie der Emulgatoren, die auf Fettsäuren basieren, die eine ungesättigte C16- oder C18-Kohlenstoffkette aufweisen und mit Polysacharidestern verestert sind, mit einem prozentualen Gewichtsanteil von weniger als 5%, aus der Familie der poly-anionischen polymeren Polycarboxylat- oder Polyacrylat-Dispergiermittel mit einem prozentualen Gewichtsanteil zwischen 0,05% und 2% und aus der Familie der nichtionischen Zusatzmittel, die auf Ethoxylat- oder Propoxylat-Alkohlen mit C6-C12-Kohlenstoffketten basieren, mit einem prozentualen Gewichtsanteil von weniger als 5% ausgewählt sind,
- einem zweiten Schritt, der in der Korrektur und Stabilisierung des pH-Wertes des besagten zu vermahlenden Grundmaterials mittels einer 25prozentigen NaOH- oder KOH-Lösung besteht,
- einem dritten Schritt, der darin besteht, Pigmente und anorganische Füllstoffe zu dem besagten zu vermahlenden Grundmaterial zu geben, darin zu dispergieren und anschließend die Mischung zu vermahlen, die aus dem besagten zu vermahlenden Grundmaterial und dem besagten Pigment und den anorganischen Füllstoffen erhalten wurde.

11. Verfahren nach Anspruch 10, wobei der erste, der zweite und der dritte Schritt mit einem Kugelmahlgerät durchgeführt werden.

12. Farbstoffpasten für Anstrichmittel und dekorative Deckschichten unter Verwendung der Zusammensetzung gemäß einem der Ansprüche 3 bis 9.

13. Mischung von befeuchtenden und dispergierenden Zusatzmitteln zum Herstellen von Wasseranstrichmitteln unter Verwendung einer Zusammensetzung gemäß Anspruch 1.

## Revendications

1. Préparation pour un mélange d'additifs mouillants et dispersants pour des peintures à l'eau, **caractérisée en ce que** lesdits additifs sont choisis parmi la famille des polyesters modifiés aux acides gras ayant un poids moléculaire compris entre 1 000 et 3 000 g/mole, un indice d'acide compris entre 35 et 60 mg de KOH/g, un indice d'amine compris entre 30 et 65 mg de KOH/g et ayant au moins deux têtes polaires basées sur des amines du type tertiaire avec un pourcentage en poids compris entre 0% et 20 %, la famille des polyesters modifiés aux acides gras ayant un poids moléculaire compris entre 1 000 et 3 000 g/mole, un indice d'acide compris entre 10 et 34 mg de KOH/g, un indice d'amine compris entre 20 et 45 mg de KOH/g et ayant des têtes polaires basées sur des amines du type tertiaire avec un pourcentage en poids compris entre 20 % et 60 %, la famille des dispersants polymères polyanioniques de polyacrylate ou de polycarboxylate ayant un pourcentage en poids compris entre 2 % et 15 %, la famille des additifs non ioniques basés sur des alcools de propoxylate ou d'éthoxylate en C6-C12 ayant un pourcentage en poids compris entre 0% et 10 %.

2. Préparation selon la revendication 1, **caractérisée en ce que** ledit mélange d'additifs mouillants et dispersants pour des peintures à l'eau comprend également au moins de l'eau avec un pourcentage en poids compris entre 15 % et 25 %.

3. Préparation pour des teintures en pâte pour des peintures colorantes et des revêtements décoratifs comprenant au moins de l'eau, des glycols, une charge minérale, des biocides, des stabilisateurs de pH, au moins un pigment organique ou inorganique et une combinaison d'additifs mouillants et dispersants, **caractérisée en ce que** lesdits additifs sont choisis parmi :
- la famille des polyesters modifiés aux acides gras ayant un poids moléculaire compris entre 1 000 et 3 000 g/mole, un indice d'acide compris entre 35 et 60 mg de KOH/g, un indice d'amine compris entre 30 et 65 mg de KOH/g, ayant au moins deux têtes polaires basées sur des amines du type tertiaire avec un pourcentage en poids compris entre 1 et 15 %,
- la famille des polyesters modifiés aux acides gras ayant un poids moléculaire compris entre 1 000 et 3 000 g/mole, un indice d'acide compris entre 10 et 34 mg de KOH/g, un indice d'amine compris entre 20 et 45 mg de KOH/g, ayant des têtes polaires basées sur des amines du type tertiaire avec un pourcentage en poids compris entre 0,5 et 6 %,
- la famille des émulsifiants basés sur des acides gras en C16 et C18 insaturés et estérifiés avec des esters de polysaccharide, ayant un pourcentage en poids inférieur à 5 %,
- la famille des dispersants polymères polyanioniques de polyacrylate ou de polycarboxylate ayant un pourcentage en poids compris entre 0,05 et 2 %,
- la famille des additifs non ioniques basés sur les alcools de propoxylate ou d'éthoxylate en C6-C12 ayant un pourcentage en poids inférieur à 5 %.

4. Préparation selon la revendication 3 pour une teinture en pâte universelle, **caractérisée en ce que** les additifs mouillants et dispersants sont présents avec un pourcentage en poids compris entre 4 % et 15 % pour les polyesters modifiés aux acides gras ayant un indice d'acide compris entre 35 et 60 mg de KOH/g, un indice d'amine compris entre 30 et 65 mg de KOH/g et ayant au moins deux têtes polaires basées sur des amines du type tertiaire, compris entre 0,5 % et 6 % pour les polyesters modifiés aux acides gras ayant un indice d'acide compris entre 10 et 34 mg de KOH/g, un indice d'amine compris entre 20 et 45 mg de KOH/g et ayant des têtes polaires basées sur des amines du type tertiaire, comprise entre 0,5 % et 5 % pour des émulsifiants basés sur des acides gras en C16 et C18 insaturés et estérifiés avec des esters de polysaccharide, compris entre 0,05 % et 2 % pour les dispersants polymères polyanioniques de polyacrylate ou de polycarboxylate.

5. Préparation selon la revendication 4, **caractérisée en ce que** ladite pâte universelle comprend également au moins de l'eau avec un pourcentage en poids compris entre 0 % et 60 % ; du polyéthylène glycol PEG200 avec un pourcentage en poids compris entre 0 % et 20 %, du polyéthylène-glycol PEG400 avec un pourcentage en poids compris entre 0 % et 10 %, du triéthylène-glycol avec un pourcentage en poids compris entre 0 % et 15 % et du tri-propylène-glycol-méthyl- éther avec un pourcentage en poids compris entre 0 % et 15 % ; une charge minérale avec un pourcentage en poids compris entre 0 % et 6 % ; et au moins un pigment.

6. Préparation selon la revendication 5, comprenant un pigment organique avec un pourcentage en poids compris entre 15 % et 45 %.

7. Préparation selon la revendication 5, comprenant un pigment inorganique avec un pourcentage en poids compris entre 30 % et 65 %.

8. Préparation selon la revendication 3, pour des teintures en pâte pour des systèmes à base d'eau, **caractérisée en ce que** les additifs mouillants et dispersants sont présents avec un pourcentage en poids compris entre 1 % et 5 % pour les polyesters modifiés aux acides gras ayant un indice d'acide compris entre 35 et 60 mg de KOH/g, un indice d'amine compris entre 30 et 65 mg de KOH/g et ayant au moins deux têtes polaires basées sur des amines du type tertiaire, compris entre 0,5 % et 6 % pour les polyesters modifiés aux acides gras ayant un indice d'acide compris entre 10 et 34 mg de KOH/g, une indice d'amine compris entre 20 et 45 mg de KOH/g et ayant des têtes premières basées sur des amines du type tertiaire, compris entre 0,1 % et 2 % pour des dispersants polymères polyanioniques de polyacrylate ou de polycarboxylate, comprise entre 0,1 % et 5 % pour des additifs non ioniques basés sur des alcools de propoxylate ou d'éthoxylate C6-C12.

9. Préparation selon la revendication 8, **caractérisée en ce que** ladite pâte pour les systèmes à base d'eau comprend également au moins de l'eau avec un pourcentage en poids compris entre 15 % et 25 % ; du polyéthylène-glycol avec un pourcentage en poids compris entre 0 % et 8 %, du polyéthylène-glycol PEG400 avec un pourcentage en poids compris entre 0 % et 8 %, du triéthylène-glycol avec un pourcentage en poids compris entre 0 % et 8 % et du tripropylène-glycol- méthyl-éther avec un pourcentage en poids compris entre 0 % et 5 %, une charge minérale avec un pourcentage en poids compris entre 0 % et 8 % ; un pigment inorganique avec un pourcentage en poids compris entre 30 % et 70 %.

10. Procédé de préparation de teintures en pâte pour des peintures colorantes et des revêtements décoratifs comprenant les étapes consistant à :
une première étape consistant en la préparation d'une base de broyage consistant en eau, polyglycols et additifs mouillants et dispersants choisis parmi la famille des polyesters modifiés aux acides gras ayant un poids moléculaire compris entre 1 000 et 3 000 g/mole, un indice d'acide compris entre 35 et 60 mg de KOH/g, un indice d'amine compris entre 30 et 65 mg de KOH/g et ayant au moins deux têtes polaires basées sur des amines du type tertiaire avec un pourcentage en poids compris entre 1 et 15 %, la famille des polyesters modifiés aux acides gras ayant un poids moléculaire compris entre 1 000 et 3 000 g/mole, un indice d'acide comprise entre 10 et 34 mg de KOH/g, un indice d'amine compris entre 20 et 45 mg de KOH/g et ayant au moins une tête polaire basée sur des amines du type tertiaire avec un pourcentage en poids compris entre 0,5 et 6 %, la famille des émulsifiants basés sur les acides gras en C16 et C18 insaturés et estérifiés avec des esters de polysaccharide avec un pourcentage en poids inférieur à 5 %, la famille de dispersants polymères polyanioniques de polyacrylate de polycarboxylate avec un pourcentage en poids compris entre 0,05 et 2 %, la famille des additifs non ioniques basés sur les alcools d'éthoxylate ou de propoxylate en C6-C12 avec un pourcentage en poids inférieur à 5 % ;
- une deuxième étape consistant en une correction et la stabilisation du pH de ladite base de broyage au moyen d'une solution de NaOH ou de KOH à 25 %;
- une troisième étape consistant en l'ajout et en la dispersion de pigment et de charges minérales dans ladite base de broyage et au broyage ultérieur du mélange obtenu à partir de ladite base de broyage et dudit pigment et des charges minérales.

11. Procédé selon la revendication 10, dans lequel les première, deuxième et troisième étapes sont exécutées avec un broyeur à boulets.

12. Teintures en pâte pour des peintures et des revêtements décoratifs utilisant les préparations selon l'une quelconque des revendications 3 à 9.

13. Mélange d'additifs mouillants et dispersants pour réaliser des peintures à l'eau utilisant la préparation selon la revendication 1.
